# EUROPEAN PATENT APPLICATION

(11) **EP 4 745 877 A1**
(43) Date of publication of application: **20.05.2026**
(21) Application number: 24839380.3
(22) Date of filing: 06.06.2024
(51) Int. Cl.: G06T 7/00, G06V 20/62

(54) **IMAGE EVALUATION DEVICE, IMAGE EVALUATION METHOD, PROGRAM, AND RECORDING MEDIUM**

(30) Priority: 10.07.2023 JP 2023113062
(71) Applicant: FUJIFILM Corporation, Tokyo 106-8620 (JP)
(72) Inventor: SAITO, Masaki, Saitama-shi, Saitama 331-9624 (JP); YAMAJI, Kei, Saitama-shi, Saitama 331-9624 (JP)
(74) Representative: Meissner Bolte Partnerschaft mbB
(86) International application number: PCT/JP2024/020740
(87) International publication number: WO 2025/013483

(57) **Abstract**

Provided are an image evaluation apparatus, an image evaluation method, a program, and a recording medium capable of appropriately evaluating an image in consideration of a feature of a frame region of the image.

One embodiment of the present invention provides an image evaluation apparatus that evaluates an image, the image evaluation apparatus including: a processor configured to: acquire first information relating to image quality of the image; acquire second information identified based on a feature of a subject of the image; acquire third information relating to a feature of a frame region of the image; and evaluate the image based on the first information, the second information, and the third information.

## Description

### BACKGROUND OF THE INVENTION

### 1. Field of the Invention

One embodiment of the present invention relates to an image evaluation apparatus, an image evaluation method, a program, and a recording medium.

### 2. Description of the Related Art

A technology of evaluating an image acquired by a user has already been developed, and a technology disclosed in JP2011-186715A is an example thereof.

A photographic image evaluation method disclosed in JP2011-186715A is a photographic image evaluation method of assigning an evaluation value as a criterion for evaluating each image data corresponding to a plurality of photographic images input from an input unit and stored in a storage unit, the photographic image evaluation method being executed by a computation unit, the photographic image evaluation method including: a photographic image evaluation step of determining an imaging scene from each image data, extracting a feature value set for each imaging scene, and assigning the evaluation value to each image data based on the feature value; an evaluation value normalization step of generating a final evaluation value by normalizing maximum and minimum values of the evaluation values assigned in the photographic image evaluation step such that the maximum and minimum values become maximum and minimum values of a predetermined reference range; and an evaluation value storage step of storing the final evaluation value in the storage unit in association with each image data.

In the photographic image evaluation step, in a case where the image data is a landscape imaging scene, at least a composition estimated based on brightness, chroma saturation, and brightness distribution of the image data is extracted as the feature value, and the evaluation value is calculated as a sum of products of evaluation points for each feature value and a weight coefficient assigned to each feature value.

In addition, in the photographic image evaluation step, in a case where the image data is a portrait imaging scene, at least a smile degree, a face region size, and a face region brightness are extracted from a face region included in the image data as the feature value, and the evaluation value is calculated as a sum of products of evaluation points for each feature value and a weight coefficient assigned to each feature value.

### SUMMARY OF THE INVENTION

In an image that is an evaluation target, a rim region called a frame region may be present along an outer edge of the image. The frame region is a portion of the image, and it is desirable to evaluate the image in consideration of a feature of the frame region.

However, in the technology disclosed in JP2011-186715A, during the evaluation of the image having no frame region and the image having the frame region, in a case where a person or a landscape displayed in an image region located inside the frame region is the same, there is a concern that the identical evaluation results may be obtained. In this case, it cannot be said that the image is appropriately evaluated in consideration of the feature of the frame region of the image.

One embodiment of the present invention has been made in view of the above circumstances, and an object of the present invention is to provide an image evaluation apparatus, an image evaluation method, a program, and a recording medium capable of appropriately evaluating an image in consideration of a feature of a frame region of the image.

In order to achieve the above-described object, an embodiment of the present invention relates to an image evaluation apparatus that evaluates an image, the image evaluation apparatus comprising: a processor configured to: acquire first information relating to image quality of the image; acquire second information identified based on a feature of a subject of the image; acquire third information relating to a feature of a frame region of the image; and evaluate the image based on the first information, the second information, and the third information.

In addition, the processor may be configured to acquire information relating to whether or not the frame region is present in the image, as the third information.

In addition, the processor may be configured to classify the image for the evaluation of the image.

In addition, the processor may be configured to calculate an evaluation score for the image for the evaluation of the image.

In addition, the processor may be configured to acquire an evaluation value for each of the first information, the second information, and the third information, normalize each of the acquired evaluation values, and calculate the evaluation score by summing the normalized evaluation values.

In addition, the processor may be configured to acquire fourth information relating to at least one of a size of the frame region, a shape of the frame region, or a proportion of the frame region to the image. In addition, the processor may be configured to evaluate the image based on the first information, the second information, the third information, and the fourth information.

In addition, the processor may be configured to acquire fifth information relating to whether or not text is present in the frame region. In addition, the processor may be configured to evaluate the image based on the first information, the second information, the third information, and the fifth information.

In addition, the processor may be configured to acquire sixth information relating to the number of text documents present in the frame region. In addition, the processor may be configured to evaluate the image based on the first information, the second information, the third information, and the sixth information.

In addition, the processor may be configured to acquire seventh information relating to content of a text document present in the frame region. In addition, the processor may be configured to evaluate the image based on the first information, the second information, the third information, and the seventh information.

In addition, the processor may be configured to acquire eighth information relating to whether or not a first decoration is present in the frame region. In addition, the processor may be configured to evaluate the image based on the first information, the second information, the third information, and the eighth information.

In addition, the processor may be configured to acquire ninth information relating to a proportion of a region having a first decoration to the frame region. In addition, the processor may be configured to evaluate the image based on the first information, the second information, the third information, and the ninth information.

In addition, the processor may be configured to acquire tenth information relating to content of a first decoration in the frame region. In addition, the processor may be configured to evaluate the image based on the first information, the second information, the third information, and the tenth information.

In addition, the processor may be configured to acquire eleventh information relating to whether a first decoration in the frame region is a handwritten decoration or a ready-made decoration. In addition, the processor may be configured to evaluate the image based on the first information, the second information, the third information, and the eleventh information.

In addition, the processor may be configured to acquire twelfth information relating to similarity between the frame region and an inner image region located inside the frame region. In addition, the processor may be configured to evaluate the image based on the first information, the second information, the third information, and the twelfth information.

In addition, the processor may be configured to acquire, for an inner image region located inside the frame region, thirteenth information relating to whether or not a second decoration is present in the inner image region. In addition, the processor may be configured to evaluate the image based on the first information, the second information, the third information, and the thirteenth information.

In addition, the processor may be configured to acquire fourteenth information relating to a proportion of a region having a second decoration in an inner image region located inside the frame region to the inner image region. In addition, the processor may be configured to evaluate the image based on the first information, the second information, the third information, and the fourteenth information.

In addition, the processor may be configured to acquire, for an inner image region located inside the frame region, fifteenth information relating to content of a second decoration in the inner image region. In addition, the processor may be configured to evaluate the image based on the first information, the second information, the third information, and the fifteenth information.

In addition, the processor may be configured to acquire sixteenth information relating to whether or not a third decoration extending from the frame region to an inner image region located inside the frame region is present. In addition, the processor may be configured to evaluate the image based on the first information, the second information, the third information, and the sixteenth information.

In addition, the processor may be configured to acquire seventeenth information relating to content of a third decoration extending from the frame region to an inner image region located inside the frame region. In addition, the processor may be configured to evaluate the image based on the first information, the second information, the third information, and the seventeenth information.

In addition, the processor may be configured to evaluate the image by inputting the image to an evaluation model to obtain output information output from the evaluation model. In addition, the evaluation model may be constructed by machine learning executed using training images and information on evaluation results for the training images.

In order to achieve the above-described object, another embodiment of the present invention relates to an image evaluation method executed by a processor, the image evaluation method including: first acquisition processing of acquiring first information relating to image quality of the image; second acquisition processing of acquiring second information identified based on a feature of a subject of the image; third acquisition processing of acquiring third information relating to a feature of a frame region of the image; and evaluation processing of evaluating the image based on the first information, the second information, and the third information.

Still another embodiment of the present invention relates to a program causing a computer to execute each processing included in the image evaluation method described above.

Still another embodiment of the present invention relates to a computer-readable recording medium on which a program causing a computer to execute each processing included in the image evaluation method described above is recorded.

According to the embodiments of the present invention, it is possible to provide the image evaluation apparatus, the image evaluation method, the program, and the recording medium capable of appropriately evaluating the image in consideration of the feature of the frame region of the image.

### BRIEF DESCRIPTION OF THE DRAWINGS

FIG. 1 is a diagram showing a state where an image is acquired on a user terminal by imaging a printed material during an image evaluation according to one embodiment of the present invention.
FIG. 2 is a diagram showing an image that is an evaluation target in the image evaluation according to one embodiment of the present invention.
FIG. 3 is a diagram showing the image that is the evaluation target in the image evaluation according to one embodiment of the present invention.
FIG. 4 is a diagram showing a configuration example of an image evaluation system including an image evaluation apparatus according to one embodiment of the present invention.
FIG. 5 is a diagram showing functions of the image evaluation apparatus according to one embodiment of the present invention.
FIG. 6 is a diagram showing the image that is the evaluation target in the image evaluation according to one embodiment of the present invention.
FIG. 7 is a diagram showing the image that is the evaluation target in the image evaluation according to one embodiment of the present invention.
FIG. 8 is a diagram showing the image that is the evaluation target in the image evaluation according to one embodiment of the present invention.
FIG. 9 is a diagram showing a selection screen for selecting the image that is the evaluation target on a display screen of the user terminal during the image evaluation according to one embodiment of the present invention.
FIG. 10 is a diagram showing an example of an evaluation score calculated in the image evaluation according to one embodiment of the present invention.
FIG. 11 is a diagram showing an example of classification of images performed in the image evaluation according to one embodiment of the present invention.
FIG. 12 is a diagram showing a procedure of an image evaluation flow according to one embodiment of the present invention.

### DESCRIPTION OF THE PREFERRED EMBODIMENTS

Specific embodiments of the present invention will be described with reference to the drawings. However, the following embodiments are merely examples for ease of understanding of the present invention, and are not intended to limit the present invention. Moreover, the present invention can be modified or improved from the following embodiments without departing from the gist of the present invention. Furthermore, the present invention also includes an equivalent thereof.

In the present specification, the concept of "apparatus" includes a single apparatus that exerts a specific function and includes a combination of a plurality of apparatuses that are present independently and are distributed but operate together (cooperate) to exert a specific function.

In addition, in the present specification, an "image" is an image that is an evaluation target, specifically, an image including a captured subject, and is an image represented by digital image data.

Examples of the image data include lossy-compressed image data such as joint photographic experts group (JPEG) format, and lossless-compressed image data such as graphics interchange format (GIF) or portable network graphics (PNG) format.

Furthermore, the image data may include accessory information indicating information such as a file name, an imaging date and time, and an imaging location.

Further, in the present specification, the "user" means a user who uses an image evaluation apparatus according to the embodiment of the present invention. Using the image evaluation apparatus means using the functions of the image evaluation apparatus, and includes using the functions of the image evaluation apparatus through a device (for example, a user terminal) that can communicate with the image evaluation apparatus, in addition to directly operating the image evaluation apparatus.

Further, in the present specification, "machine learning" may include a neural network, a convolutional neural network, a recurrent neural network, attention mechanisms, a transformer, a generative adversarial network, a deep-learning neural network, a Boltzmann machine, matrix factorization, a factorization machine, an M-way factorization machine, a field-aware factorization machine, a field-aware neural factorization machine, a support vector machine, a Bayesian network, a decision tree, and a random forest, as well as other types of machine learning.

### <<Overview of Image Evaluation>>

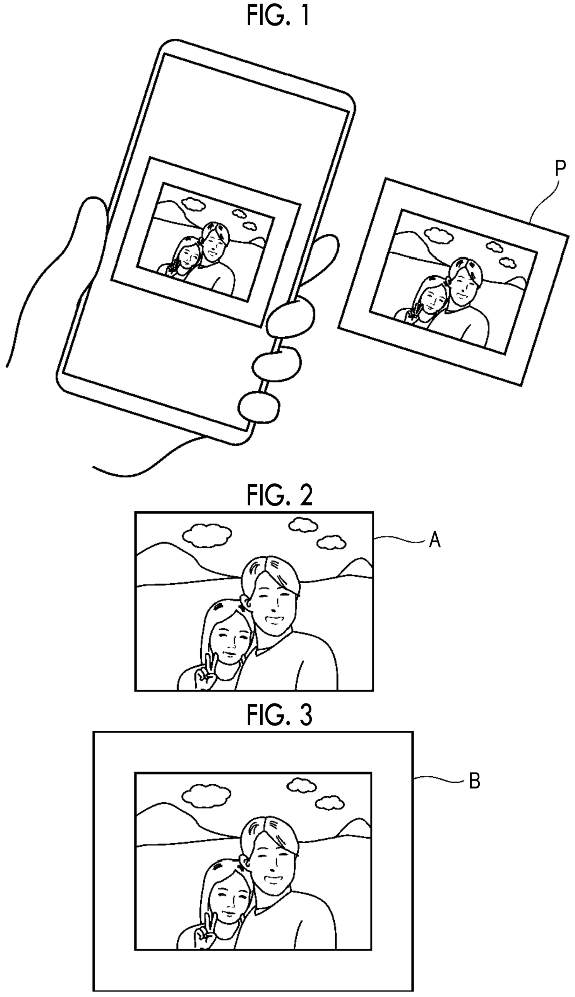

An image evaluation performed using an image evaluation apparatus and an image evaluation method according to one embodiment of the present invention will be described with reference to FIGS. 1 to 3.

In the image evaluation, an image that is an evaluation target is acquired, and the acquired image is analyzed to acquire first information, second information, and third information, and the image is evaluated based on the acquired first to third information.

The "first information" is information relating to image quality, the "second information" is information identified based on a feature of a subject of the image, and the "third information" is information relating to a feature of a frame region of the image.

Details of the first to third information will be described later.

The "frame region" is a margin region that forms a rectangular frame along an outer edge of the image, and more specifically, as shown in FIG. 3, is a region surrounding an inner image region including a person, a landscape, and the like as the subject.

The "evaluation of the image" includes calculating an evaluation score for the image and classifying the image.

The image evaluation is used, for example, in a case where a photo book or the like is created.

More specifically, it is common that each person owns one or more smart devices such as a smartphone having a camera function, and each person can easily capture an image when desired. In addition, it is also possible to easily exchange the captured images through a social networking service (SNS) or the like among acquaintances. As a result, each person often owns a large number of images.

Meanwhile, in a case where the photo book or the like is created, a desired image is selected from among a large number of images owned, and the more the number of owned images is, the more effort is required to select the image.

In this regard, by performing the image evaluation, an evaluation score can be assigned to each of a large number of images. Accordingly, for example, images to be included in the photo book can be selected in order of decreasing evaluation score, and images with higher evaluation scores can be laid out in the photo book in more prominent positions or sizes.

In particular, in the image evaluation, features relating to the frame region, namely, features relating to the presence or absence of the frame region and the appearance (look) of the frame region, are reflected in the evaluation score; accordingly, for example, images with more pronounced frame-region features can be laid out in the photo book in more conspicuous positions or sizes.

Further, by performing the image evaluation, a large number of images can be classified, for example, by scene or by life stage, and, depending on the scene or life stage, it is possible to determine the pages on which the images are laid out in the photo book or to create separate photo books.

In particular, in the image evaluation, since the feature of the frame region are reflected in the classification of the images, a layout page of the photo book can be determined or separate photo books can be created for each feature of the frame region.

Hereinafter, an example of the calculation of the evaluation score for the image will be described.

In a case of calculating the evaluation score for the image, first, as shown in FIG. 1, a printed material P such as a photo is captured (scanned) by a user terminal or the like having a camera function to acquire an image (captured image) in which the printed material P is a subject. An image acquired in this example is an image A having no frame region as shown in FIG. 2 and an image B having the frame region as shown in FIG. 3. Then, by performing image analysis on each of the acquired images A and B, a feature value relating to a feature of each of the image quality, the subject, and the frame region is identified (extracted) for each of the images A and B, and an evaluation value for each of the first information, the second information, and the third information is acquired based on the identified feature values. Thereafter, the acquired evaluation values are normalized, and the normalized evaluation values are totaled to calculate the evaluation score for each of the images A and B.

The above processing is a series of processing in a case where the evaluation score for the image is calculated for the evaluation of the image.

In a case where a difference between the images A and B is limited to the presence or absence of the frame region, and a person, a landscape, and the like as the subject in an inner image region located inside the frame region are the same, the evaluation values for each of the first information and the second information are the same in the images A and B, and only the evaluation value for the third information is different. Then, in a case where the evaluation value for the third information of the image B having the frame region is higher than that of the image A having no frame region, the evaluation score obtained by summing the normalized evaluation values is also higher in the image B than in the image A. That is, the image B receives a higher evaluation than the image A.

Hereinafter, an example of the classification of the images will be described.

A method of acquiring the images A and B that are the evaluation targets is the same as the method of calculating the evaluation score for the image described above. Then, by performing the image analysis on each of the acquired images A and B, the feature value relating to the feature of each of the image quality, the subject, and the frame region is identified (extracted) for each of the images A and B, and the evaluation value for each of the first information, the second information, and the third information is acquired based on the identified feature values. Thereafter, the acquired evaluation values are compared with preset classification criteria based on each feature of the image quality, the subject, and the frame region, and the images A and B are classified into image groups. In this example, the images A and B differ in at least the presence or absence of the frame region, and for example, in a case where whether or not the frame region is present is included in the preset classification criteria, the images A and B are classified into different groups.

The above processing is a series of processing in a case where the image is classified for the evaluation of the image.

The "user terminal" is a computer used by the user, and specifically, a smart device such as a smartphone, a tablet, a laptop personal computer (PC), or the like.

In addition, the "printed material P" is, for example, a photo obtained by developing a latent image recorded on a medium such as an instant film by an instant camera, or a printed material obtained by printing image data on a medium by a printer.

More specifically, the printed material P may have a frame portion that forms a rectangular frame along an outer edge of the printed material P, and a print portion that is located inside the frame portion and on which a subject image obtained by printing (development) is formed.

The frame portion of the printed material P varies in a size, a shape, a proportion of an area to the entire region of the printed material P, a color, a design, and the like depending on the medium to be used.

The design of the frame portion includes, for example, a picture of a character, a pattern, a message, or the like.

The color or the design of the frame portion may be applied to the medium in a production step of the medium, may be printed together with the subject during printing of the medium, or may be added by hand or the like to the printed material P after printing (development).

An image acquired by using such a printed material P as the subject is an image that is the evaluation target in the embodiment of the present invention, and an image of the frame portion in the image corresponds to the frame region, and an image of the print portion corresponds to the inner image region.

In addition, in the image evaluation, the image is evaluated based on the first information, the second information, and the third information, but the present invention is not limited to this, and the image may be evaluated based on at least one of the first to third information or at least one of fourth to twenty-first information described later.

The fourth to twenty-first information are broadly classified into information relating to the frame region (fourth to eleventh and nineteenth information), information relating to the inner image region (thirteenth to fifteenth and twentieth information), and information relating to a relationship between the frame region and the inner image region (twelfth, sixteenth, and seventeenth information).

Details of the fourth to twenty-first information will be described later together with the first to third information.

### <<Configuration Example of Image Evaluation System According to One Embodiment of Present Invention>>

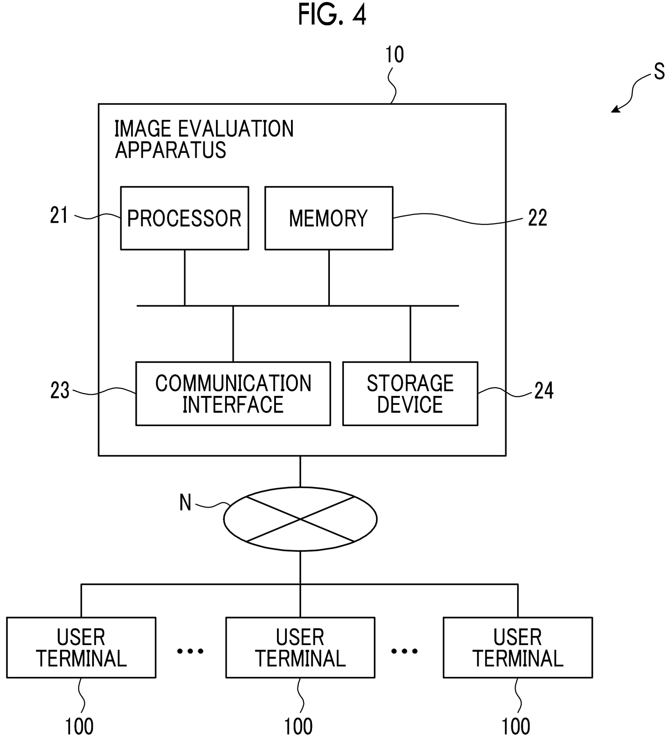

A configuration of an image evaluation system (hereinafter, referred to as an "image evaluation system S") including the image evaluation apparatus according to one embodiment of the present invention will be described with reference to FIG. 4.

As shown in FIG. 4, the image evaluation system S is configured by an image evaluation apparatus 10 and a plurality of user terminals 100. The image evaluation apparatus 10 and the plurality of user terminals 100 are communicably connected to each other through a network N.

The image evaluation apparatus 10 is configured by a server computer. The image evaluation apparatus 10 may be configured by one server computer or a plurality of server computers that are distributed in parallel. In addition, the server computer constituting the image evaluation apparatus 10 may be a server computer for an application service provider (ASP), software as a service (SaaS), platform as a service (PaaS), or infrastructure as a service (IaaS). In a case where necessary information is input to the user terminal 100, the above-described server computer executes various types of processing (operations) based on the input information, and an operation result is output on the user terminal 100 side. That is, the functions of the server computer that is the image evaluation apparatus 10 can be used on the user terminal 100 side.

As shown in FIG. 4, the computer constituting the image evaluation apparatus 10 includes a processor 21, a memory 22, a communication interface 23, and a storage device 24.

The processor 21 is configured by, for example, a central processing unit (CPU), a micro-processing unit (MPU), a micro controller unit (MCU), a graphics processing unit (GPU), a digital signal processor (DSP), a tensor processing unit (TPU), an application-specific integrated circuit (ASIC), or the like.

The memory 22 is configured by, for example, a semiconductor memory such as a read-only memory (ROM) and a random-access memory (RAM). A program (hereinafter, an image evaluation program) for executing the image evaluation is stored in the memory 22. The image evaluation program is a program causing the processor 21 to execute each processing of the image evaluation method described later. The image evaluation program may be acquired by being read from a computer-readable recording medium, or may be acquired by being downloaded through a communication network such as the Internet or an intranet.

The communication interface 23 may be configured by, for example, a network interface card or a communication interface board. The computer constituting the image evaluation apparatus 10 is able to communicate with another device connected to the Internet, a mobile communication line, or the like via the communication interface 23.

The storage device 24 is configured by, for example, a flash memory, a hard disc drive (HDD), a solid-state drive (SSD), a flexible disc (FD), a magneto-optical disc (MO disc), a compact disc (CD), a digital versatile disc (DVD), a secure digital card (SD card), a universal serial bus memory (USB memory), or the like. The storage device 24 may be built in a computer body constituting the image evaluation apparatus 10 or may be externally mounted on the computer body.

The user terminal 100 comprises a processor, a memory, a communication interface, a camera, an input device, and an output device.

In addition, an application program (hereinafter, referred to as an image selection application) for selecting the image that is the evaluation target is installed in the user terminal 100, and in a case where the user performs a predetermined operation through a display screen, the image selection application is started. After the image selection application is started, the user selects one or more images that is the evaluation target, and the selected image is transmitted to the image evaluation apparatus 10, whereupon the image evaluation apparatus 10 acquires the selected image, and a series of image evaluation processing is executed.

### <<Functions of Image Evaluation Apparatus According to One Embodiment of Present Invention>>

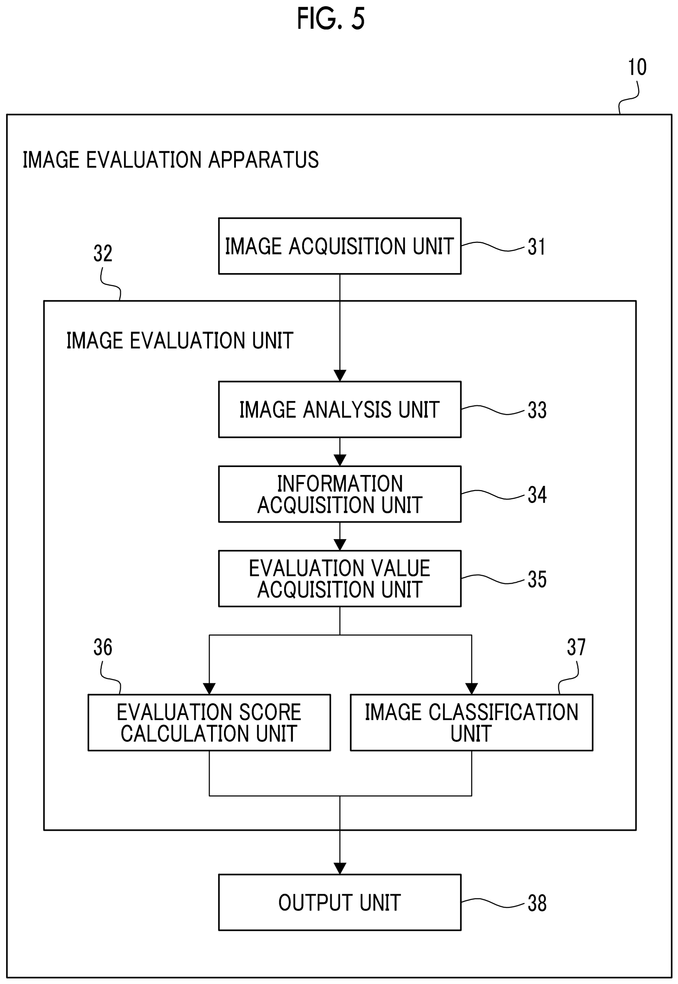

Hereinafter, the configuration of the image evaluation apparatus 10 according to one embodiment of the present invention will be described again from the viewpoint of the functional aspects. As shown in FIG. 5, the image evaluation apparatus 10 includes an image acquisition unit 31, an image evaluation unit 32, and an output unit 38.

These functional units are implemented by cooperation between a hardware device included in the computer constituting the image evaluation apparatus 10 and the program (that is, software) installed in the computer.

Hereinafter, each of the functional units will be described.

### <Image Acquisition Unit>

The image acquisition unit 31 acquires one or more images transmitted from the user terminal 100. More specifically, the user selects one or more images that are the evaluation targets on an operation screen of the user terminal 100, and the one or more images selected on the user terminal 100 are transmitted from the user terminal 100, whereby the image acquisition unit 31 acquires the one or more images.

The image transmitted from the user terminal 100 may be an image captured (scanned) by the camera function of the user terminal 100, or may be an image acquired by the user terminal 100 from another user terminal or the like by communicating with another user terminal or the like via the network N.

### <Image Evaluation Unit>

The image evaluation unit 32 evaluates the image acquired by the image acquisition unit 31.

In the present invention, one aspect of the image evaluation includes the classification of the images.

The image evaluation unit 32 has aspects of the functional units of an image analysis unit 33, an information acquisition unit 34, an evaluation value acquisition unit 35, an evaluation score calculation unit 36, and an image classification unit 37.

Only one of the evaluation score calculation unit 36 or the image classification unit 37 may be put into operation, or both of the evaluation score calculation unit 36 and the image classification unit 37 may be put into operation.

The image evaluation unit 32 may evaluate the image by inputting the acquired image to an evaluation model (trained model) to obtain output information output from the evaluation model.

The evaluation model is constructed by machine learning executed using training images and information on evaluation results for the training images.

That is, a relationship between the training image as input information and the evaluation result as the output information, which are prepared in advance as training data, is analyzed, and a mathematical model (function) that defines the relationship is constructed.

As the training image, an image having features relating to the image quality, the content of the subject, whether or not the frame region is present, or the appearance (look) of the frame region, for example, a plurality of sample images each including at least one or more subjects are used.

As the evaluation result, the evaluation score and correct answer information of the classification result which are prepared in advance for each of a plurality of training images are used.

### [Image Analysis Unit]

The image analysis unit 33 analyzes the image acquired by the image acquisition unit 31.

More specifically, the image analysis unit 33 identifies, for example, the frame region and the inner image region of the frame region by using a known edge detection technique.

Then, the image analysis unit 33 identifies a feature value relating to the image quality of the image, a feature value relating to the subject of the image, and other feature values for the inner image region by using a known feature value extraction technique. As the feature value relating to the subject, for example, a subject detection technique, a face detection technique, a smile degree determination technique, or the like is used.

In addition, the image analysis unit 33 identifies a feature value relating to the frame region of the image.

In addition, the image analysis unit 33 identifies a feature value relating to a relationship between the frame region and the inner image region.

The feature value is a numerical value representing a feature relating to the image quality of the acquired image, the content of the subject, whether or not the frame region is present, or the appearance (look) of the frame region.

### [Information Acquisition Unit]

The information acquisition unit 34 acquires at least the first to third information among the first to twenty-first information based on the feature value identified by the image analysis unit 33.

### (First Information)

The first information is information relating to the image quality, and more specifically, is brightness, hue, contrast, resolution, noise, blurriness, sharpness, or the like of the image.

### (Second Information)

The second information is information identified based on the feature of the subject of the image, and in a case where the subject is a person, for example, the second information is the number of persons, the number of faces, a proportion of a person region to the image, a proportion of a face region to the image, a smile degree of the face, blurriness of the person or the face, a posture of the person, or the like.

In addition, in a case where the subject is a landscape, the second information is, for example, information for identifying a night view, the sea, a beach, the sky, or the like.

In addition, in a case where the subject is an object, the second information is, for example, information relating to an object for identifying an event such as a sports day and a wedding, and more specifically, is information on a wedding dress or the like.

### (Third Information)

The third information is information relating to the feature of the frame region of the image, and is, for example, information relating to whether or not the frame region is present in the image.

### (Fourth Information)

The fourth information is information relating to at least one of a size of the frame region, a shape of the frame region, or a proportion of the frame region to the image.

The "size of the frame region" is an area of the frame forming the frame region.

The "shape of the frame region" is a shape of the frame forming the frame region, and changes in accordance with a width of a region along each of four sides of the image in the frame region, an aspect ratio of the image, and the like.

The "proportion of the frame region to the image" is a proportion (ratio) of an area of the frame region to a total area of the inner image region and the frame region.

### (Fifth Information)

The fifth information is information relating to whether or not text is present in the frame region.

The "text" is broadly interpreted here as a formal unit composed of characters, numerical values, symbols, or a list thereof. The text also includes characters, numerical values, symbols, or a list thereof that do not convey meaning by itself, as well as a word or a document that conveys meaning by itself.

### (Sixth Information)

The sixth information is information relating to the number of text documents present in the frame region.

The "text document" means a word or a document that conveys meaning by itself.

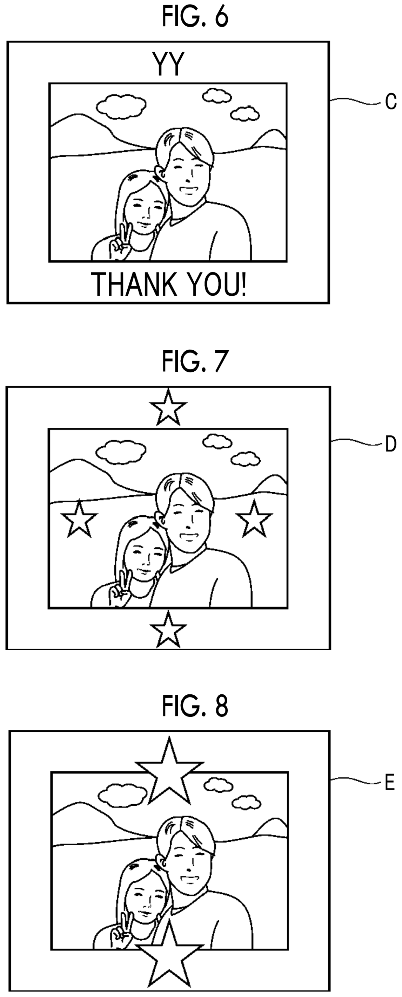

More specifically, in an image C shown in FIG. 6, text of "THANK YOU!" and text of "YY" are present. The text of "YY" does not convey meaning by itself, and thus does not correspond to the text document. On the other hand, the text of "THANK YOU!" is a word or a document that conveys meaning by itself, and thus corresponds to the text document.

### (Seventh Information)

The seventh information is information relating to content of the text document present in the frame region.

The "content of the text document" is, for example, a date or a message.

Specifically, in the image C shown in FIG. 6, the text document of "THANK YOU!" is present, and this text document corresponds to the message.

### (Eighth Information)

The eighth information is information relating to whether or not a first decoration is present in the frame region.

The "decoration" corresponds to a picture, a pattern, or the like.

For example, in an image D shown in FIG. 7, star-shaped first decorations are present in regions along an upper side and a lower side of the image in the frame region.

The same applies to the definition of a second decoration and a third decoration described later.

### (Ninth Information)

The ninth information is information relating to a proportion of a region having the first decoration to the frame region.

Specifically, in a frame region of the image D shown in FIG. 7, two star-shaped first decorations are present. In this case, the information acquisition unit 34 acquires, as the ninth information, information indicating a proportion of a region obtained by summing regions of the two star-shaped first decorations to the entire region of the frame region.

### (Tenth Information)

The tenth information is information relating to content of the first decoration in the frame region.

The "content of the first decoration" includes, for example, information relating to a logo of a company, an organization, or the like that provides the medium of the printed material P, an illustration of a mascot character, or the like.

The same applies to the definition of the content of the second decoration and the content of the third decoration described later.

### (Eleventh Information)

The eleventh information is information relating to whether the first decoration in the frame region is a handwritten decoration or a ready-made decoration.

The "handwritten decoration" corresponds to, for example, a decoration added by hand to the printed material P after printing (development).

The "ready-made decoration" may be, for example, a decoration applied to the medium in the production step of the medium, a decoration printed on the medium during printing of the medium, a decoration drawn by a pen or the like on the printed material P after printing (development), or a decoration image added (strictly speaking, combined) to the frame region of the acquired image by image editing.

The decoration by the image editing also includes adding an effect to the image, that is, combining an decorative object with the image.

### (Twelfth information)

The twelfth information is information relating to similarity between the frame region and the inner image region located inside the frame region.

Examples of the similarity between the frame region and the inner image region include similarity in hue, similarity in content of the decoration, or similarity in theme.

A case where the similarity in hue is high corresponds to, for example, a case where a hue of an image of the inner image region (color used in the entire image) is a color close to a background color of the frame region.

A case where the similarity in content of the decoration is high corresponds to, for example, a case where, as in the image D shown in FIG. 7, the frame region includes the star-shaped first decoration and the inner image region includes a star-shaped second decoration of the same type.

A case where the similarity in theme is high corresponds to, for example, a case where the frame region includes a first decoration representing a theme park and the inner image region includes an image captured by the user when visiting the theme park.

### (Thirteenth Information)

The thirteenth information is information relating to whether or not a second decoration is present in the inner image region.

The "second decoration of the inner image region" does not include a pattern or the like as an imaging target (subject), and corresponds to a decoration added separately from the imaging target in the inner image region.

More specifically, the second decoration of the inner image region may be a decoration printed on the print portion of the medium together with the subject during printing of the medium, may be a decoration drawn on the print portion after printing (development) by a pen or the like, or may be a decoration image added (strictly speaking, combined) to the inner image region of the acquired image by image editing.

### (Fourteenth Information)

The fourteenth information is information relating to a proportion of a region having the second decoration in the inner image region to the inner image region.

More specifically, in the inner image region of the image D shown in FIG. 7, two star-shaped second decorations are present. In this case, the information acquisition unit 34 acquires, as the fourteenth information, information indicating a proportion of a region obtained by summing regions of the two star-shaped second decorations to the entire region of the inner image region.

### (Fifteenth Information)

The fifteenth information is information relating to content of the second decoration in the inner image region.

The definition of the content of the second decoration is the same as the above-described definition of the content of the first decoration.

### (Sixteenth Information)

The sixteenth information is information relating to whether or not a third decoration extending from the frame region to the inner image region is present.

More specifically, in an image E shown in FIG. 8, a star-shaped third decoration extends from a region along an upper side of the image in the frame region to an upper region of the inner image region toward the center of the image. In addition, in the image E, the star-shaped third decoration extends from a region along a lower side of the image in the frame region to a lower region of the inner image region toward the center of the image. In this case, the information acquisition unit 34 acquires, as the sixteenth information, information indicating that the third decoration extending from the frame region to the inner image region is present.

### (Seventeenth Information)

The seventeenth information is information relating to content of the third decoration extending from the frame region to the inner image region.

The definition of the content of the third decoration is the same as the above-described definition of the content of the first decoration.

### (Eighteenth Information)

The eighteenth information is information relating to a proportion of a region having the third decoration to the image.

More specifically, in the image E shown in FIG. 8, two star-shaped third decorations are present. In this case, the information acquisition unit 34 acquires, as the eighteenth information, information indicating a proportion of a region obtained by summing regions of the two star-shaped third decorations to the entire region of the image.

### (Nineteenth Information)

The nineteenth information is information relating to whether the text in the frame region of the image is handwritten text or ready-made text.

The "handwritten text" corresponds to text added by hand to the printed material P after printing (development).

The "ready-made text" corresponds to text applied to the frame portion of the medium in the production step of the medium, text printed on the frame portion during printing of the medium, text drawn on the frame portion after printing (development) by a pen or the like, or a text image added (strictly speaking, combined) to the frame region of the acquired image by image editing.

### (Twentieth Information)

The twentieth information is information relating to whether the second decoration in the inner image region is a handwritten decoration or a ready-made decoration.

### (Twenty-First Information)

The twenty-first information is information relating to whether the third decoration extending from the frame region to the inner image region is a handwritten decoration or a ready-made decoration.

### [Evaluation Value Acquisition Unit]

The evaluation value acquisition unit 35 acquires the evaluation value by evaluating at least each of the first to third information among the first to twenty-first information acquired by the information acquisition unit 34.

### (Binary Evaluation Value)

The evaluation value acquisition unit 35 acquires a binary evaluation value for the information (information included in the third information) relating to whether or not the frame region is present in the image, the fifth information relating to whether or not the text is present in the frame region, the eighth information relating to whether or not the first decoration is present in the frame region, the thirteenth information relating to whether or not the second decoration is present in the inner image region, and the sixteenth information relating to whether or not the third decoration extending from the frame region to the inner image region is present.

Specifically, since the image A shown in FIG. 2 does not have the frame region, the evaluation value acquisition unit 35 acquires the evaluation value for the third information indicating that the frame region is not present.

On the other hand, since the image B shown in FIG. 3 has the frame region, the evaluation value acquisition unit 35 acquires the evaluation value for the third information indicating that the frame region is present.

In addition, in the image C shown in FIG. 6, the text of "THANK YOU!" is present in a region along a lower side of the image in the frame region, and the text of "YY" is present in a region along an upper side of the image. Therefore, the evaluation value acquisition unit 35 acquires the evaluation value for the fifth information indicating that the text is present in the frame region.

In addition, in the image D shown in FIG. 7, the star-shaped first decorations are present in the regions along the upper side and the lower side of the image in the frame region. In this case, the evaluation value acquisition unit 35 acquires the evaluation value for the eighth information indicating that the first decoration is present in the frame region.

In the image D shown in FIG. 7, two star-shaped second decorations are present in the inner image region. Therefore, the evaluation value acquisition unit 35 acquires the evaluation value for the thirteenth information indicating that the second decoration is present in the inner image region.

In addition, in the image E shown in FIG. 8, a star-shaped third decoration extends from the region along the upper side of the image in the frame region to the upper region of the inner image region toward the center of the image. In addition, in the image E, the star-shaped third decoration extends from the region along the lower side of the image in the frame region to the lower region of the inner image region toward the center of the image. Therefore, the information acquisition unit 34 acquires the evaluation value for the sixteenth information indicating that the third decoration extending from the frame region to the inner image region is present.

Further, the evaluation value acquisition unit 35 acquires the binary evaluation value for each of the eleventh, nineteenth, twentieth, and twenty-first information relating to whether the text is handwritten text or ready-made text or whether the decoration is a handwritten decoration or a ready-made decoration.

More specifically, the evaluation value acquisition unit 35 determines whether the text is handwritten text or ready-made text or whether the decoration is a handwritten decoration or a ready-made decoration based on each of the eleventh, nineteenth, twentieth, and twenty-first information, and calculates the evaluation value in accordance with the determination result.

A determination model (trained model) may be used for the determination whether the text is handwritten text or ready-made text. The determination model is constructed by analyzing a relationship between a handwritten or ready-made text image or decoration image as the input information and a determination result that is the correct answer as the output information, which are prepared in advance as the training data, and using a mathematical model (function) that defines the relationship.

### (Multi-valued Evaluation Value)

The evaluation value acquisition unit 35 acquires a multi-valued or binary evaluation value for information other than the information described above.

In a case where the multi-valued evaluation value is acquired, the evaluation value acquisition unit 35 may acquire the evaluation value for each information with, for example, the evaluation value obtained by evaluating a reference image prepared in advance as a reference. For example, the evaluation value acquisition unit 35 may set a range of upper and lower limits of the evaluation value to 0 to 100, and may assign the evaluation value for each information with 50 as the evaluation value for the reference image.

In a case where the evaluation value for the first information relating to the image quality of the image is acquired and, for example, the resolution of the image that is the evaluation target is higher than the resolution (average resolution of the entire image) of the reference image, the evaluation value acquisition unit 35 may acquire a higher evaluation value.

In addition, in a case where the second information identified based on the feature of the subject of the image is acquired and, for example, the smile degree of the image that is the evaluation target is higher than the smile degree of the subject of the reference image (average or total of the smile degrees of a plurality of subjects in a case where there are a plurality of subjects in the image), the evaluation value acquisition unit 35 may acquire a higher evaluation value.

In addition, in a case where the evaluation value for the fourth information relating to the size of the frame region, the shape of the frame region, or the proportion of the frame region to the image is acquired, for example, the size of the reference image is generally used as an L size (89 mm × 127 mm), and the width of the frame region is set to 4 mm at each of the upper side, the lower side, the left side, and the right side of the reference image.

On the other hand, in a case where the size of the frame region of the acquired image, that is, the area of the frame forming the frame region is larger than that of the reference image, the evaluation value acquisition unit 35 may acquire a higher evaluation value or a lower evaluation value than the evaluation value for the reference image.

In addition, in a case where the evaluation value for the shape of the frame region is acquired, for example, in a case where the outer shape of the frame region of the reference image is a square and the outer shape of the frame region of the acquired image is a rectangle longer in a lateral direction, the evaluation value acquisition unit 35 may acquire a higher evaluation value or a lower evaluation value than the evaluation value for the reference image.

In addition, for the evaluation value for the proportion of the frame region to the image (referred to as the proportion of the frame region), in a case where the proportion of the frame region of the acquired image is larger than the proportion of the frame region of the reference image, the evaluation value acquisition unit 35 may acquire a higher evaluation value or a lower evaluation value than the evaluation value for the reference image.

The size of the frame region, the shape of the frame region, or the proportion of the frame region to the image may be determined for the entire region of the frame region or for a portion of the frame region.

Specifically, the evaluation value for each of the size of the frame region, the shape of the frame region, or the proportion of the frame region to the image may be acquired based only on a region along the lower side among the frame regions formed along four sides (upper side, lower side, left side, and right side) of the image.

In a case where the region along the lower side in the frame region has a feature as compared with other regions, for example, in a case where the width of the lower side is wider than the width of a side other than the lower side, the evaluation value for the size of the frame region may be acquired based on the size of the region along the lower side.

In addition, in a case where the evaluation value for the sixth information relating to the number of text documents present in the frame region is acquired, for example, in the image C shown in FIG. 6, the text of "THANK YOU!" and the text of "YY" is present. The text of "YY" does not convey meaning by itself, and thus does not correspond to the text document. On the other hand, the text of "THANK YOU!" is a word or a document that conveys meaning by itself, and thus corresponds to the text document.

For example, in a case where the reference image is an image having one text document in the frame region, the image C is also an image having one text document in the frame region, and thus the evaluation value acquisition unit 35 may acquire the evaluation value corresponding to the number of text documents, which is the same as the evaluation value for the reference image.

In addition, in a case where the evaluation value for the seventh information relating to the content of the text document present in the frame region is acquired, for example, a higher evaluation value may be assigned to the text document of the message than to the date or the like.

More specifically, in a case where the text document in the frame region of the reference image is the date and the message of "THANK YOU!" is present in the image C shown in FIG. 6, the evaluation value acquisition unit 35 may acquire a higher evaluation value than the evaluation value for the reference image.

In addition, in a case where the evaluation value for the ninth information relating to the proportion of the region having the first decoration to the frame region is acquired and, for example, one star-shaped first decoration as in the image D shown in FIG. 7 is present in the reference image, the image D including the two star-shaped first decorations has a larger proportion of the region having the first decoration than the reference image. Therefore, the evaluation value acquisition unit 35 may acquire a higher evaluation value than the evaluation value for the reference image.

In a case where the evaluation value for the fourteenth information relating to the proportion of the region having the second decoration in the inner image region to the inner image region is acquired and in a case where the evaluation value for the eighteenth information relating to the proportion of the region having the third decoration to the image is acquired, the same applies as in a case where the evaluation value for the ninth information is acquired.

For example, in a case where one star-shaped second decoration as in the image D shown in FIG. 7 is present in the reference image, the image D including the two star-shaped second decorations has a larger proportion of the region having the second decoration than the reference image. Therefore, the evaluation value acquisition unit 35 may acquire a higher evaluation value than the evaluation value for the reference image.

In addition, in a case where one star-shaped third decoration as in the image E shown in FIG. 8 is present in the reference image, the image E including the two star-shaped third decorations has a larger proportion of the region having the third decoration than the reference image. Therefore, the information acquisition unit 34 may acquire a higher evaluation value than the evaluation value for the reference image.

In addition, in a case where the evaluation value for the tenth information relating to the content of the first decoration in the frame region is acquired, and the first decoration of the reference image is a freely licensed illustration and the first decoration of the image that is the evaluation target is an illustration such as a logo or a mascot character of a specific company or organization, the information acquisition unit 34 may acquire a higher evaluation value than the evaluation value for the reference image.

In a case where the evaluation value for the fifteenth information relating to the content of the second decoration in the inner image region is acquired and in a case where the seventeenth information relating to the content of the third decoration extending from the frame region to the inner image region is acquired, the same applies as in a case where the evaluation value for the tenth information is acquired.

In addition, in a case where the evaluation value for the twelfth information relating to the similarity between the frame region and the inner image region located inside the frame region is acquired and, for example, the similarity between the frame region and the inner image region of the image that is the evaluation target is higher than that of the reference image, the evaluation value acquisition unit 35 may acquire a higher evaluation value than the evaluation value for the reference image.

Conversely, in a case where the similarity between the frame region and the inner image region is low, that is, in a case where the contrast (non-similarity) between the frame region and the inner image region is high, the evaluation value acquisition unit 35 may acquire a higher evaluation value than the evaluation value for the reference image.

### [Evaluation Score Calculation Unit]

The evaluation score calculation unit 36 normalizes the evaluation value for at least each of the first to third information among the first to twenty-first information acquired by the evaluation value acquisition unit 35, for example, converts the normalized evaluation value into a value in a range of 0 to 1, and calculates the evaluation score by summing the normalized evaluation values to obtain a total.

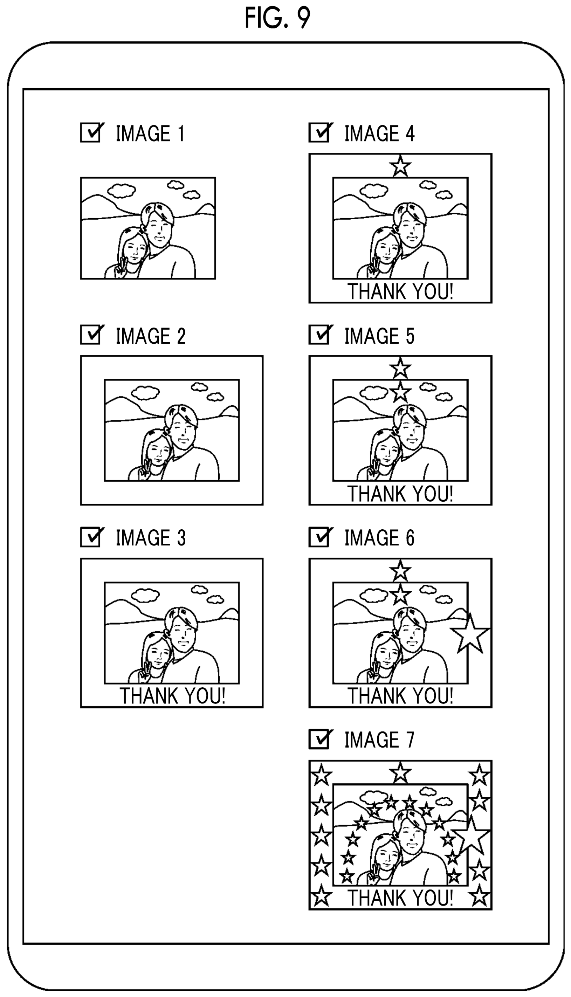

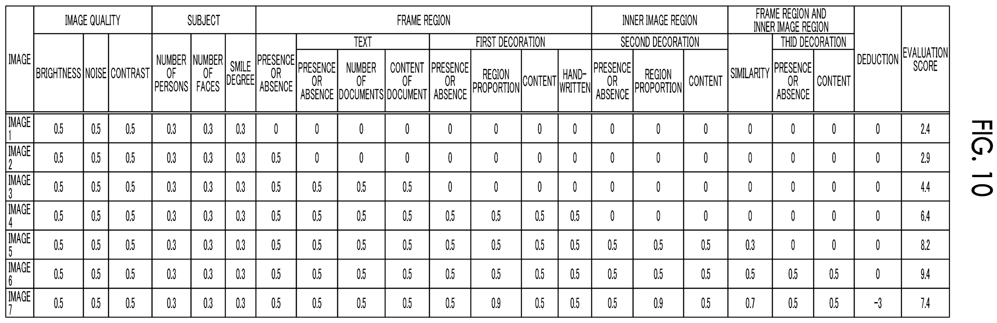

An example of the calculation of the evaluation score will be described with reference to FIGS. 9 and 10.

FIG. 9 is a diagram showing a selection screen for selecting the image that is the evaluation target on the screen of the user terminal 100.

FIG. 10 is a table showing the normalized evaluation value for each image as a selection target and the evaluation score indicating the total of the normalized evaluation values.

For selected images 1 to 7 shown in FIG. 9, it is assumed that the evaluation value relating to the image quality of the image and the evaluation value relating to the feature of the subject (strictly speaking, the normalized evaluation value) are the same between the images.

In the example shown in FIGS. 9 and 10, at least the following (1) to (3) are adopted as evaluation criteria for assigning the evaluation score.
(1) The image having the frame region is assigned a higher evaluation score than the image having no frame region.
(2) For the image in which the text or the decoration is present in the frame region, the more the number of the text or the decoration there is, the higher the evaluation score is assigned.
(3) For the image in which the text or the decoration is present in the frame region, in a case where the number of pieces of text or decorations exceeds an upper limit number set in advance, the evaluation score is deducted in accordance with the number of pieces of text or decorations.

The above-described evaluation criteria are adopted, for example, in a case of increasing the evaluation score for the image having the frame region to easily extract the image having the frame region.

Specifically, the image 1 shown in FIG. 9 is the image having no frame region, and thus, as shown in FIG. 10, has the lowest evaluation score as compared with the images 2 to 7 having the frame region.

The image 2 is the image having the frame region, and thus the image 2 has a higher evaluation score than the image 1 having no frame region. On the other hand, since neither the text nor the first decoration is present in the frame region, the image 2 has a lower evaluation score than the image 3.

Since the text is present in the frame region of the image 3, the image 3 has a higher evaluation score than the image 2. On the other hand, since there is only one text, the image 3 has a lower evaluation score than the image 4.

Since the image 4 has both the text and the first decoration in the frame region, the image 4 has a higher evaluation score than the image 3 in which only one text is present in the frame region. On the other hand, since the second decoration is not present in the inner image region, the image 4 has a lower evaluation score than the image 5.

Since the image 5 has the text and the first decoration in the frame region and the second decoration in the inner image region, the image 5 has a higher evaluation score than the image 4. On the other hand, since the third decoration extending from the frame region to the inner image region is not present, the image 5 has a lower evaluation score than the image 6.

Since the image 6 has the text and the first decoration in the frame region, the second decoration in the inner image region, and the third decoration extending from the frame region to the inner image region, the image 6 has the highest evaluation score among the images 1 to 6.

In addition, the image 7 has the text in the frame region and the first to third decorations, as in the image 6. However, since the value of the proportion of the region of the first decoration to the frame region and the value of the proportion of the region of the second decoration to the inner image region exceed a predetermined upper limit value, the evaluation score is deducted, and as a result, the image 7 has a lower evaluation score than the image 5.

### [Image Classification Unit]

The image classification unit 37 classifies the image by comparing the evaluation value for at least each of the first to third information among the first to twenty-first information acquired by the evaluation value acquisition unit 35 with preset classification criteria.

The classification criteria are not particularly limited, and may be, for example, whether or not the frame region is present, the size of the frame region, the shape of the frame region, or the proportion of the frame region to the image, whether or not the text is present in the frame region, the number of text documents present in the frame region, the content of the text document present in the frame region, whether or not the handwritten text is present, whether or not the ready-made text is present, whether or not the first decoration is present in the frame region, the proportion of the region having the first decoration to the frame region, the content of the first decoration in the frame region, whether or not the handwritten first decoration is present, or whether or not the ready-made first decoration is present.

In addition, the classification criteria may be whether or not the second decoration is present in the inner image region, the proportion of the region having the second decoration in the inner image region to the inner image region, the content of the second decoration in the inner image region, the similarity between the frame region and the inner image region, whether or not the third decoration extending from the frame region to the inner image region is present, or the content of the third decoration extending from the frame region to the inner image region.

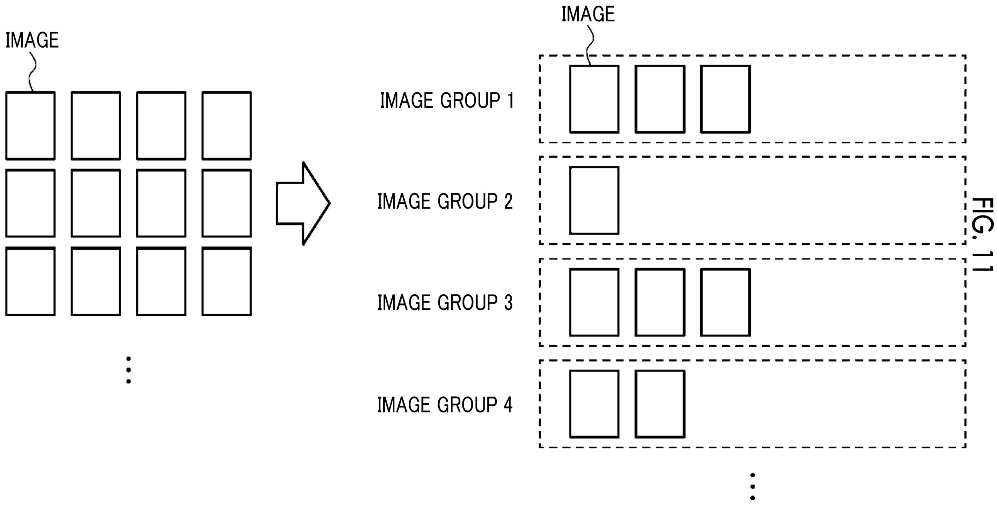

The image classification unit 37 classifies a plurality of images that are the evaluation targets into image groups 1 to N (N is a natural number of 2 or more) as shown in FIG. 11 by using at least any one of the classification criteria described above.

In addition, the image may be classified by, for example, a classification model (trained model) in addition to the classification based on the classification criteria.

The classification model is constructed by machine learning using training data including the first to twenty-first information of the image and information (correct answer information) indicating the classification results.

Further, the image may be classified based on the evaluation score calculated by the evaluation score calculation unit 36. For example, the images that are the evaluation targets may be classified into a plurality of image groups (three image groups of upper, middle, and lower ranks) based on the evaluation scores.

### <Output Unit>

The output unit 38 outputs the evaluation result to the user terminal 100.

More specifically, the output unit 38 acquires either or both of the evaluation score calculated by the evaluation score calculation unit 36 and the classification of the images executed by the image classification unit 37 as the evaluation result, and transmits the acquired information to the user terminal 100. The transmitted evaluation result is presented to the user by, for example, being displayed on the display screen of the user terminal 100 or the like.

### <<Image Evaluation Flow According to One Embodiment of Present Invention>>

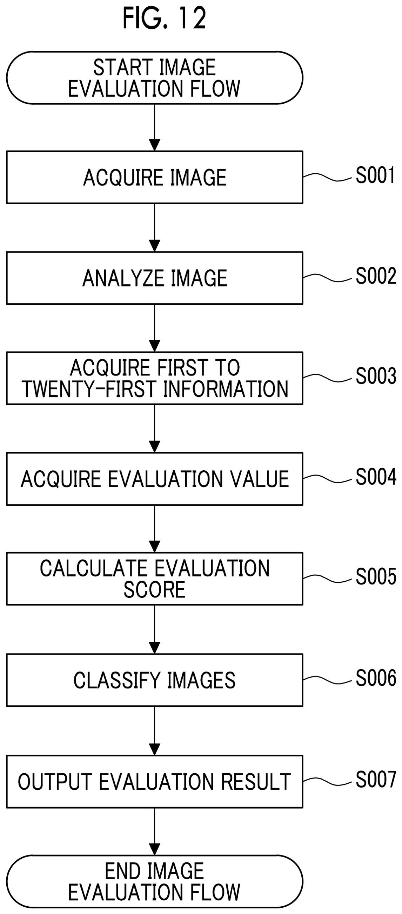

Hereinafter, an image evaluation flow, which is a data processing flow using the image evaluation apparatus 10 described above, will be described. The image evaluation flow adopts the image evaluation method according to the embodiment of the present invention and proceeds along the flow shown in FIG. 12. That is, each step in the flow shown in FIG. 12 corresponds to each element constituting the image evaluation method according to the embodiment of the present invention.

The flow shown in FIG. 12 is merely an example, and a new step may be added within a range not departing from the gist of the present invention.

First, in a case where the user starts the image selection application installed in the user terminal 100, a signal generated in conjunction with the start of the application is transmitted to the server computer constituting the image evaluation apparatus 10. The image evaluation flow is started in response to the signal transmission.

In a case where the image that is an evaluation target is transmitted from the user terminal 100, the processor 21 acquires the image that is the evaluation target (S001).

Next, the processor 21 evaluates the acquired image.

First, the processor 21 analyzes the acquired image using a known image analysis technique (S002). More specifically, the processor 21 identifies the feature value of the acquired image.

Next, the processor 21 acquires at least the first to third information among the first to twenty-first information based on the identified feature value of each item (S003).

Next, the processor 21 acquires the evaluation value by evaluating at least each of the first to third information among the acquired first to twenty-first information (S004).

Then, the processor 21 normalizes the evaluation value for at least each of the first to third information among the first to twenty-first information, and calculates the evaluation score by summing the normalized evaluation values to obtain a total (S005).

In addition, the processor 21 determines the image group as a classification destination by comparing the evaluation value for at least each of the first to third information among the first to twenty-first information with the preset classification criteria, and classifies the image (S006).

The processor 21 may execute any either or both of the calculation of the evaluation score in step S005 and the classification of the images in step S006.

Then, the processor 21 outputs the evaluation result to the user terminal 100 (S007). The transmitted evaluation result is presented to the user by, for example, being displayed on the display screen of the user terminal 100 or the like.

The image evaluation flow ends when the series of processing described above ends.

### <<Effectiveness of One Embodiment of Present Invention>>

As described above, the processor 21 evaluates the image based on the first information, the second information, and the third information, so that the image can be appropriately evaluated in consideration of the feature of the frame region.

More specifically, as described in the section of "SUMMARY OF THE INVENTION", in the related art disclosed in JP2011-186715A and the like, in the evaluation of the image 1 having no frame region shown in FIG. 9 of the present specification and the image 2 having the frame region, in a case where a person and a landscape displayed in the inner image region located inside the frame region are the same, there is a concern that the identical evaluation results may be obtained.

On the other hand, in the image evaluation according to the embodiment of the present invention, the third information relating to the feature of the frame region of the image is acquired together with the first information and the second information, and the image is evaluated based on the first information, the second information, and the third information.

More specifically, the processor 21 first identifies the frame region and the inner image region of the frame region. Next, the processor 21 identifies the feature value relating to the feature of the identified frame region, acquires the evaluation value for the third information based on the identified feature value, and determines the evaluation score (or classifies the image) in consideration of the acquired evaluation value for the third information.

As a result, the image 1 and the image 2 shown in FIG. 9 have different evaluation scores from each other, for example, as shown in FIG. 10, so that the image can be appropriately evaluated in consideration of the feature of the frame region.

The evaluation result for the image by the image evaluation may be used to select a necessary image from among the plurality of images, for example, in a case where the photo book or the like is created.

The evaluation result of the image by the image evaluation may be assigned to the image as accessory information of the image, for example, exchangeable image file format (Exif) information.

Further, the processor 21 classifies the image for the evaluation of the image.

With the above-described configuration, since the plurality of images can be handled as the image group, in a case where the photo book or the like is created, the user can smoothly select the image.

Further, the processor 21 calculates the evaluation score for the image for the evaluation of the image.

With the above-described configuration, since the evaluation of the image can be quantified, objectivity of the evaluation can be ensured.

In addition, the processor 21 acquires the evaluation value for each of the first information, the second information, and the third information, normalizes each of the acquired evaluation values, and calculates the evaluation score by summing the normalized evaluation values.

In the above-described configuration, since the evaluation value is normalized, the normalized evaluation values are totaled, and the total is calculated as the evaluation score, the processing of calculating the evaluation score can be simplified.

In addition, the processor 21 acquires decoration information (specifically, the eleventh information, the twentieth information, or the twenty-first information) relating to whether each of the first decoration, the second decoration, or the third decoration is a handwritten decoration or a ready-made decoration, and evaluates the image based on the first information, the second information, and the decoration information.

With the above configuration, for example, a handwritten decoration being drawn by an individual and therefore of higher uniqueness (rarity) can be given a higher evaluation than a ready-made decoration.

In addition, the processor 21 acquires the nineteenth information relating to whether the text in the frame region is handwritten text or ready-made text, and evaluates the image based on the first information, the second information, the third information, and the nineteenth information.

With the above configuration, for example, handwritten text being drawn by an individual and therefore of higher uniqueness (rarity) can be given a higher evaluation than ready-made text.

### <<Other Embodiments>>

In the above-described embodiment, the image in which the printed material P comprising the frame portion of the printed material P is the subject is set as the image that is the evaluation target. However, the present invention is not limited to this, and for example, an image having a frame region obtained by combining a frame image with a general captured image in which a subject other than the printed material P is included by image editing may be set as the image that is the evaluation target.

In addition, in the above-described embodiment, the image captured by the user terminal 100 having the camera function is set as the image that is the evaluation target. However, the present invention is not limited to this, and an image acquired from the outside, for example, an image that is publicly available on an SNS or an image shared by an acquaintance, may be set as the image that is the evaluation target.

In addition, in the above-described embodiment, the example has been described in which the image is evaluated by using the trained model or the like, but the present invention is not limited to this, and for example, a look-up table (hereinafter, also referred to as LUT) in which a correspondence relationship between a state of the subject and the evaluation score is defined in advance or the like may be used, and the score corresponding to the state of the subject in the image may be calculated from the LUT.

In addition, in the above-described embodiment, the evaluation value for the third information of the image B having the frame region shown in FIG. 3 is higher than that of the image A having no frame region shown in FIG. 2. However, the present invention is not limited to this, and for example, the evaluation value for the third information of the image A having no frame region may be higher than that of the image B having the frame region. As described above, the evaluation result may be different depending on the evaluation criteria to be adopted.

In addition, in the image evaluation system S, the image evaluation apparatus 10 is configured by the server computer, but the present invention is not limited to this, and for example, the image evaluation apparatus according to the embodiment of the present invention may be configured by the user terminal.

The image evaluation apparatus according to the embodiment of the present invention and the processor included in the image evaluation apparatus include various processors. The various processors include, for example, a CPU, which is a general-purpose processor that executes software (programs) to function as various processing units.

In addition, the various processors include a programmable logic device (PLD) that is a processor of which a circuit configuration is changeable after manufacture, such as a field-programmable gate array (FPGA).

Further, the various processors also include a dedicated electric circuit that is a processor of which a circuit configuration is specially designed to execute specific processing, such as an application-specific integrated circuit (ASIC).

Further, the image evaluation apparatus according to the embodiment of the present invention, or one processing unit included in the image evaluation apparatus, may be configured by any one of the above-described processors, or by a combination of two or more homogeneous or heterogeneous processors, for example, a combination of multiple FPGAs or a combination of an FPGA and a CPU.

Further, a plurality of functional units included in the image evaluation apparatus according to the embodiment of the present invention may be configured by any one of the various processors, and two or more of the plurality of functional units may be configured together by a single processor.

Further, as in the above-described embodiments, one processor may be configured as a combination of one or more CPUs and software, and this processor may operate as the plurality of functional units.

Furthermore, for example, as typified by a system on a chip (SoC), it is also possible to adopt a configuration that uses a processor which implements, on a single integrated circuit (IC) chip, the functions of an entire system including the plurality of functional units in the image evaluation apparatus according to the embodiment of the present invention. Furthermore, the hardware configuration of the various processors described above may be an electrical circuit (circuitry) formed by combining circuit elements such as semiconductor devices.

### Explanation of References

10: image evaluation apparatus
21: processor
22: memory
23: communication interface
24: storage device
31: image acquisition unit
32: image evaluation unit
33: image analysis unit
34: information acquisition unit
35: evaluation value acquisition unit
36: evaluation score calculation unit
37: image classification unit
38: output unit
100: user terminal
A, B, C, D, E: image
N: network
P: printed material
S: image evaluation system

## Claims

1. An image evaluation apparatus that evaluates an image, the image evaluation apparatus comprising:
a processor configured to:
acquire first information relating to image quality of the image;
acquire second information identified based on a feature of a subject of the image;
acquire third information relating to a feature of a frame region of the image; and
evaluate the image based on the first information, the second information, and the third information.

2. The image evaluation apparatus according to claim 1,
wherein the processor is configured to acquire information relating to whether or not the frame region is present in the image, as the third information.

3. The image evaluation apparatus according to claim 1,
wherein the processor is configured to classify the image for the evaluation of the image.

4. The image evaluation apparatus according to claim 1,
wherein the processor is configured to calculate an evaluation score for the image for the evaluation of the image.

5. The image evaluation apparatus according to claim 4,
wherein the processor is configured to acquire an evaluation value for each of the first information, the second information, and the third information, normalize each of the acquired evaluation values, and calculate the evaluation score by summing the normalized evaluation values.

6. The image evaluation apparatus according to claim 1,
wherein the processor is configured to acquire fourth information relating to at least one of a size of the frame region, a shape of the frame region, or a proportion of the frame region to the image, and evaluate the image based on the first information, the second information, the third information, and the fourth information.

7. The image evaluation apparatus according to claim 1,
wherein the processor is configured to acquire fifth information relating to whether or not text is present in the frame region, and evaluate the image based on the first information, the second information, the third information, and the fifth information.

8. The image evaluation apparatus according to claim 1,
wherein the processor is configured to acquire sixth information relating to the number of text documents present in the frame region, and evaluate the image based on the first information, the second information, the third information, and the sixth information.

9. The image evaluation apparatus according to claim 1,
wherein the processor is configured to acquire seventh information relating to content of a text document present in the frame region, and evaluate the image based on the first information, the second information, the third information, and the seventh information.

10. The image evaluation apparatus according to claim 1,
wherein the processor is configured to acquire eighth information relating to whether or not a first decoration is present in the frame region, and evaluate the image based on the first information, the second information, the third information, and the eighth information.

11. The image evaluation apparatus according to claim 1,
wherein the processor is configured to acquire ninth information relating to a proportion of a region having a first decoration to the frame region, and evaluate the image based on the first information, the second information, the third information, and the ninth information.

12. The image evaluation apparatus according to claim 1,
wherein the processor is configured to acquire tenth information relating to content of a first decoration in the frame region, and evaluate the image based on the first information, the second information, the third information, and the tenth information.

13. The image evaluation apparatus according to claim 1,
wherein the processor is configured to acquire eleventh information relating to whether a first decoration in the frame region is a handwritten decoration or a ready-made decoration, and evaluate the image based on the first information, the second information, the third information, and the eleventh information.

14. The image evaluation apparatus according to claim 1,
wherein the processor is configured to acquire twelfth information relating to similarity between the frame region and an inner image region located inside the frame region, and evaluate the image based on the first information, the second information, the third information, and the twelfth information.

15. The image evaluation apparatus according to claim 1,
wherein the processor is configured to acquire, for an inner image region located inside the frame region, thirteenth information relating to whether or not a second decoration is present in the inner image region, and evaluate the image based on the first information, the second information, the third information, and the thirteenth information.

16. The image evaluation apparatus according to claim 1,
wherein the processor is configured to acquire fourteenth information relating to a proportion of a region having a second decoration in an inner image region located inside the frame region to the inner image region, and evaluate the image based on the first information, the second information, the third information, and the fourteenth information.

17. The image evaluation apparatus according to claim 1,
wherein the processor is configured to acquire, for an inner image region located inside the frame region, fifteenth information relating to content of a second decoration in the inner image region, and evaluate the image based on the first information, the second information, the third information, and the fifteenth information.

18. The image evaluation apparatus according to claim 1,
wherein the processor is configured to acquire sixteenth information relating to whether or not a third decoration extending from the frame region to an inner image region located inside the frame region is present, and evaluate the image based on the first information, the second information, the third information, and the sixteenth information.

19. The image evaluation apparatus according to claim 1,
wherein the processor is configured to acquire seventeenth information relating to content of a third decoration extending from the frame region to an inner image region located inside the frame region, and evaluate the image based on the first information, the second information, the third information, and the seventeenth information.

20. The image evaluation apparatus according to claim 1,
wherein the processor is configured to evaluate the image by inputting the image to an evaluation model to obtain output information output from the evaluation model, and
the evaluation model is constructed by machine learning executed using training images and information on evaluation results for the training images.

21. An image evaluation method executed by a processor, the image evaluation method comprising:
first acquisition processing of acquiring first information relating to image quality of the image;
second acquisition processing of acquiring second information identified based on a feature of a subject of the image;
third acquisition processing of acquiring third information relating to a feature of a frame region of the image; and
evaluation processing of evaluating the image based on the first information, the second information, and the third information.

22. A program causing a computer to execute each processing included in the image evaluation method according to claim 21.

23. A computer-readable recording medium on which a program causing a computer to execute each processing included in the image evaluation method according to claim 21 is recorded.
